# EUROPEAN PATENT APPLICATION

(11) **EP 4 763 676 A1**
(43) Date of publication of application: **24.06.2026**
(21) Application number: 24857823.9
(22) Date of filing: 06.05.2024
(51) Int. Cl.: B62D 25/02, B60R 19/18, B62D 21/15, B62D 25/20, B60K 1/04

(54) **SIDE PILLAR COLLISION PROTECTION STRUCTURE, VEHICLE BODY, AND VEHICLE**

(30) Priority: 31.08.2023 CN 202311120750; 08.09.2023 CN 202311166272
(71) Applicant: Contemporary Amperex Intelligence Technology (Shanghai) Limited, Shanghai 201306 (CN)
(72) Inventor: AI, Yuhong, Shanghai 201306 (CN); ZHANG, Liangan, Shanghai 201306 (CN); HUANG, Dong, Shanghai 201306 (CN); MA, Caijun, Shanghai 201306 (CN); YU, Zhigang, Shanghai 201306 (CN); GUO, Qixin, Shanghai 201306 (CN); LI, Yunfei, Shanghai 201306 (CN); LI, Song, Shanghai 201306 (CN)
(74) Representative: Gong, Jinping
(86) International application number: PCT/CN2024/091272
(87) International publication number: WO 2025/044273

(57) **Abstract**

A side pillar collision protection structure (1), a vehicle body, and a vehicle (1000) are provided. The side pillar collision protection structure (1) includes: a first beam, where the first beam extends along a first direction; a plurality of first cross beams (40), where the plurality of first cross beams (40) are spaced apart along the first direction, each of the first cross beams (40) extends along a second direction, end portions of the plurality of first cross beams (40) are separately connected to the first beam, and the first direction and the second direction form an angle; and an energy-absorbing structural component, where the energy-absorbing structural component is arranged on the first beam and the energy-absorbing structural component is configured to crush and deform under a first set pressure, thereby improving an energy absorption capability of the first beam and reducing force on the first beam.

## Description

### CROSS-REFERENCE TO RELATED APPLICATIONS

This application is based on and claims priority to the Chinese Patent Application No. 202311120750.8 filed on August 31, 2023 and the Chinese Patent Application No. 202311166272.4 filed on September 8, 2023, which are incorporated herein by reference in their entirety.

### TECHNICAL FIELD

This application relates to the field of vehicles, and in particular, to a side pillar collision protection structure, a vehicle body, and a vehicle.

### BACKGROUND

A sill beam of a vehicle is generally connected to beams before and after seats. A load impacting a side of the vehicle is absorbed through deformation of the sill beam, and the remaining energy of the load is transmitted to another side of a vehicle body through the beams before and after seats. However, due to a simple structure of the sill beam and limited energy absorption capability, large impact force is borne by the beams before and after seats.

### SUMMARY

In view of the above problem, this application provides a side pillar collision protection structure, a vehicle body, and a vehicle, to improve an energy absorption capability of a first beam and reduce force on the first beam.

In a first aspect, this application provides a side pillar collision protection structure, including: a first beam, where the first beam extends along a first direction; a plurality of first cross beams, where the plurality of first cross beams are spaced apart along the first direction, each of the first cross beams extends along a second direction, end portions of the plurality of first cross beams are separately connected to the first beam, and the first direction and the second direction form an angle; and an energy-absorbing structural component, where the energy-absorbing structural component is provided on the first beam, and the energy-absorbing structural component is configured to crush and deform under a first set pressure.

In the technical solution of the embodiments of this application, the side pillar collision protection structure is provided with the energy-absorbing structural component on the first beam. When the first beam is subjected to impact force, the energy-absorbing structural component can bear part of the impact force, reducing the remaining load of the impact force, reducing the impact force on the first beam and the first cross beams, improving the protection effect of the energy-absorbing structural component on the first beam and the first cross beams. In addition, the plurality of first cross beams can jointly bear the remaining load of the impact force, which can reduce the impact force on a single first cross beam. The energy-absorbing structural component and the plurality of first cross beams can separately absorb the impact force on the first beam, thereby improving the bending resistance of the first beam.

According to some embodiments of this application, the energy-absorbing structural component includes at least one first buffer cavity extending along the second direction. In the above technical solution, the first buffer cavity extending along the second direction can buffer the impact force received by the energy-absorbing structural component from the second direction, reducing the force on the first beam and the first cross beams.

According to some embodiments of this application, a cross-section of the energy-absorbing structural component is in a honeycomb shape, and the cross-section is perpendicular to the second direction. In the above technical solution, such a design of the cross-section of the energy-absorbing structural component can enhance the capability of the energy-absorbing structural component to bear pressure in the second direction, and can also enhance the structural strength of the energy-absorbing structural component.

According to some embodiments of this application, in the second direction, end portions of at least two of the first cross beams are connected through a side beam, and the side beam is fixed to the first beam. In the above technical solution, the side beam connects at least two first cross beams to distribute the force on the side beam from the first beam to the at least two first cross beams, so that at least two first cross beams jointly bear the force, reducing the impact force on a single first cross beam.

According to some embodiments of this application, the side beam is configured to crush and deform under a second set pressure. In the above technical solution, after the side beam crushes and deforms under force, the transmission of the remaining force to at least two first cross beams connected to the side beam can be blocked, which can reduce the force on the first cross beams; and the crushing and deformation of the side beam can also increase the absorption of collision energy by the side beam.

According to some embodiments of this application, the side beam includes at least one second buffer cavity extending along the first direction. In the above technical solution, the second buffer cavity may buffer the force received by the side beam to reduce the force transmitted by the side beam to the plurality of first cross beams, thereby reducing the force on each first cross beam.

According to some embodiments of this application, in the second direction, an end portion of the energy-absorbing structural component is connected to the side beam. In the above technical solution, the force transmitted from the first beam to the side beam may be absorbed by the energy-absorbing structural component, reducing the force on the side beam while enhancing the energy absorption effect of the energy-absorbing structural component.

According to some embodiments of this application, the energy-absorbing structural component passes through the first beam. In the above technical solution, in such a positional relationship between the energy-absorbing structural component and the first beam, at least part of the energy-absorbing structural component is located inside the first beam. The energy-absorbing structural component is able to bear part of the impact force perpendicular to the first direction. When the impact force reaches the first set pressure, the energy-absorbing structural component crushes and deforms, to reduce a load borne by the first beam.

According to some embodiments of this application, the side pillar collision protection structure further includes a housing, where a holding space for holding a battery unit is provided in the housing. In the above technical solution, the first beam is provided on a side of the top cover. The energy-absorbing structural component and the side beam provided in the side pillar collision protection structure can distribute the impact force on the first beam, improve the bending resistance of the first beam, reduce the deformation amount of the first beam, avoid deformation of the first beam and intrusion into the holding space, and strengthen the protection of the battery unit.

According to some embodiments of this application, the side pillar collision protection structure further includes an intermediate beam provided in the holding space, the intermediate beam extends along the second direction, the intermediate beam is provided below a top cover of the housing, and the intermediate beam is fixed to at least one of the first cross beams. In the above technical solution, the intermediate beam is fixed to at least one first cross beam, so that the upper force transmission path and the lower force transmission path may transmit force as a whole, improving the capability to transmit the load as a whole, improving the effect of reducing the impact force on the first beam and improving the bending resistance of the first beam.

According to some embodiments of this application, the intermediate beam is fixed to one of the first cross beams through a plurality of fixing connectors. In the above technical solution, the intermediate beam and the first cross beam enable overall force transmission, improving the capability to transmit the overall load. In addition, the multiple fixing points between the intermediate beam and the first cross beams enhance the stability of the fixed connection between the intermediate beam and the first cross beams.

According to some embodiments of this application, in the second direction, part of the energy-absorbing structural component is arranged directly opposite to the intermediate beam. In the above technical solution, part of the energy-absorbing structural component is directly opposite to the intermediate beam, so that part of the energy-absorbing structural component can absorb part of the force on the intermediate beam, to enhance the energy absorption capability of part of the energy-absorbing structural component and reduce the pressure of the lower force transmission path in transmitting the load.

According to some embodiments of this application, part of the energy-absorbing structural component is connected to the intermediate beam. In the above technical solution, the energy-absorbing structural component may preferentially bear the force and undergo crushing and deformation. After the energy is effectively absorbed, the remaining load is then transmitted to the intermediate beam. This effectively reduces the load borne by the intermediate beam and the first cross beam, and reduces the pressure of the upper force transmission path and the lower force transmission path in transmitting the load.

According to some embodiments of this application, the energy-absorbing structural component includes a first energy-absorbing member and a second energy-absorbing member, the first energy-absorbing member and the second energy-absorbing member are spaced apart in an up-down direction, the first energy-absorbing member is connected to the side beam, the second energy-absorbing member is connected to the intermediate beam, both the first energy-absorbing member and the second energy-absorbing member are configured to crush and deform under the first set pressure. In the above technical solution, when the first beam is impacted, the first energy-absorbing member and the second energy-absorbing member preferentially bear the force and undergo crushing and deformation, and both the first energy-absorbing member and the second energy-absorbing member crush and deform in an axial direction, effectively absorbing the energy, thereby reducing the load borne by the first cross beam and the intermediate beam.

According to some embodiments of this application, both the first energy-absorbing member and the second energy-absorbing member pass through the first beam. In the above technical solution, when the first beam is impacted, both the first energy-absorbing member and the second energy-absorbing member crush and deform in the axial direction, effectively absorbing energy and reducing the force on the first beam.

According to some embodiments of this application, the first beam is a sill beam, and part of a side wall of the housing is defined by the first beam. In the above technical solution, the first beam may serve as a part of the housing. In this case, part of the side beam of the housing is saved, and integration of the housing and the sill beam is achieved, ensuring the space for arranging the battery unit, simplifying the overall structure of the side pillar collision protection structure, reducing component costs of the side pillar collision protection structure.

In a second aspect, this application further provides a vehicle body having the side pillar collision protection structure in the above embodiments.

In a third aspect, this application further provides a vehicle having the vehicle body in the above embodiments.

Additional aspects and advantages of this application are presented in part in the following description, evident in part from the following description, or be learned through practice of this application.

### BRIEF DESCRIPTION OF DRAWINGS

By reading the detailed description of the preferred embodiments below, various other advantages and benefits will become clear to those of ordinary skill in the art. The drawings are only for the purpose of illustrating the preferred embodiments and are not considered as limitations to this application. Moreover, the same reference signs denote the same components throughout all the drawings. In the drawings:
FIG. 1 is a structural diagram of an upper side of a top cover of a side pillar collision protection structure according to an embodiment of this application.
FIG. 2 is a structural diagram of a lower side of a top cover of a side pillar collision protection structure according to an embodiment of this application.
FIG. 3 is a structural diagram of an upper side of a top cover of a side pillar collision protection structure with a hidden first beam according to an embodiment of this application.
FIG. 4 is an enlarged view of an area A circled in FIG. 3.
FIG. 5 is a schematic diagram of a vehicle according to an embodiment of this application.

The reference signs in the specific embodiments are as follows:
1. side pillar collision protection structure;
10. top cover;
21. first portion; 22. second portion;
30a. first buffer cavity; 31. first energy-absorbing member; 32. second energy-absorbing member;
40. first cross beam;
50. side beam; 50a. second buffer cavity;
60. intermediate beam; 70. fixing connector; and
1000. vehicle.

### DESCRIPTION OF EMBODIMENTS

The embodiments of the technical solutions of this application are described in detail below with reference to the accompanying drawings. The following embodiments are only for illustrating the technical solutions of this application more clearly, and thus are only examples and do not limit the protection scope of this application.

Unless otherwise defined, all technical and scientific terms used herein have the same meaning as commonly understood by those of ordinary skill in the art to which this application pertains. The terms used herein are for the purpose of describing specific embodiments only and are not intended to limit this application. The terms "include" and "have" and any variations thereof in the specification, claims, and above description of the drawings of this application are intended to cover non-exclusive inclusion.

In the description of the embodiments of this application, the technical terms such as "first" and "second" are used only to distinguish different objects and are not to be understood as indication or implication of relative importance or implicit indication of a quantity, specific order, or primary-secondary relationship of the indicated technical features. In the description of the embodiments of this application, "plurality" means two or more, unless specifically defined otherwise.

As used herein, "an embodiment" means that a particular feature, structure, or characteristic described with reference to the embodiment may be included in at least one embodiment of this application. The appearance of the phrase at various places in the specification does not necessarily refer to the same embodiment, nor is it an independent or alternative embodiment that is mutually exclusive from other embodiments. Those of ordinary skill in the art should explicitly and implicitly understand that the embodiments described herein may be combined with other embodiments.

In the description of the embodiments of this application, the term "and/or" is merely an association describing associated objects, indicating that three relationships may exist, for example, A and/or B may indicate: A exists alone, A and B exist simultaneously, B exists alone. In addition, the character "/" herein generally indicates that the preceding and following associated objects are in an "or" relationship.

In the description of the embodiments of this application, the term "plurality" refers to two or more (including two), similarly, "plurality of groups" refers to two or more groups (including two groups), and "plurality of pieces" refers to two or more pieces (including two pieces).

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientations or positional relationships shown in the drawings, and is only for facilitating the description of the embodiments of this application and simplifying the description, rather than indicating or implying that the referred apparatus or element must have a specific orientation, or be constructed and operated in a specific orientation, and therefore should not be understood as limitations to the embodiments of this application.

In the description of the embodiments of this application, unless otherwise expressly specified and limited, the technical terms "mount", "connect", "couple", "fix", and the like should be understood in a broad sense, for example, may refer to a fixed connection, a detachable connection, or integration; or a mechanical connection or an electrical connection; or may be a direct connection or an indirect connection through an intermediary; or internal communication of two elements or the interaction relationship between two elements. For those of ordinary skill in the art, the specific meanings of the above terms in the embodiments of this application may be understood according to specific situations.

Currently, as market trends evolve, the application of traction batteries is becoming increasingly widespread. Traction batteries are not only applied to energy storage power systems such as hydraulic, thermal, wind, and solar power stations, but also widely applied to electric bicycles, electric motorcycles, electric vehicles and other electric vehicles, as well as in military equipment, aerospace, other fields. With the continuous expansion of the application fields of traction batteries, market demand is also continuously increasing.

In the related art, vehicles are generally provided with battery cells for power supply, and the battery cells may be provided in a housing to form an energy housing. Edges of the energy housing are generally provided with a sill beam. A setting direction of the sill beam is consistent with a traveling direction of the vehicle and is located on a side of the vehicle, and the sill beam is generally connected to beams before and after seats. Setting directions of the beams before and after seats are consistent with a width direction of the vehicle. When a vehicle is subjected to a side collision, the sill beam bears force and absorbs energy by deforming, and the remaining energy of the load is transmitted to another side of a vehicle body through the beams before and after seats, so as to reduce the damage to the battery cells caused by the side collision force and improve the protection effect on the battery cells.

However, due to the single structure of the sill beam and limited energy absorption capability, the sill beam and the beams before and after seats are subjected to large impact force, causing the sill beam and the beams before and after seats to easily collapse and deform, greatly affecting the safety performance of the vehicle.

To alleviate at least one of the above technical problems, in the embodiments of this application, a side pillar collision protection structure is provided, specifically including: a first beam, a plurality of first cross beams, and an energy-absorbing structural component. The first beam extends along a first direction; the plurality of first cross beams are spaced apart along the first direction; each of the first cross beams extends along a second direction; end portions of the plurality of first cross beams are separately connected to the first beam; the first direction and the second direction form an angle; the energy-absorbing structural component is provided on the first beam; and the energy-absorbing structural component is configured to crush and deform under a first set pressure.

The energy-absorbing structural component is provided on the first beam, so that after the first beam is subjected to a side collision, the energy-absorbing structural component bears part of the impact force, reducing a load of the remaining impact force on the first beam, improving the protection effect of the energy-absorbing structural component on the first beam, and this can improve an energy absorption capability of the first beam and reduce the force on the first beam.

Furthermore, to further reduce the force on the first beam, in the embodiments of this application, the plurality of first cross beams are connected to the first beam, so that the plurality of first cross beams can jointly bear the remaining load of the impact force.

In short, in the context of increasing emphasis on vehicle safety performance, the side pillar collision protection structure in the embodiments of this application can improve an energy absorption capability of the first beam, reduce force on the first beam, and ensure the safety performance of a vehicle.

The side pillar collision protection structure disclosed in the embodiments of this application can be applied to a vehicle, and the vehicle may be a fuel vehicle, gas vehicle, or new energy vehicle, and the new energy vehicle may be a pure electric vehicle, hybrid vehicle, or extended-range vehicle, or the like. Further, the side pillar collision protection structure disclosed in the embodiments of this application may be provided at any position of a vehicle according to needs. For example, the side pillar collision protection structure disclosed in the embodiments of this application may be provided on a top of the vehicle, and the side pillar collision protection structure at this place can reduce force on the top of the vehicle during side collision. The side pillar collision protection structure disclosed in the embodiments of this application may alternatively be applied to a bottom of the vehicle, and the side pillar collision protection structure at this place can reduce force on the bottom of the vehicle during side collision. When the battery assembly is provided at the bottom of the vehicle, the side pillar collision protection structure can reduce the damage to an energy housing caused by the side collision force and improve the protection effect on the energy housing. The position where the side pillar collision protection structure is provided is not limited herein.

In the following embodiments, a side pillar collision protection structure 1, a vehicle body, and a vehicle 1000 according to an embodiment of this application are described as examples for convenience of explanation.

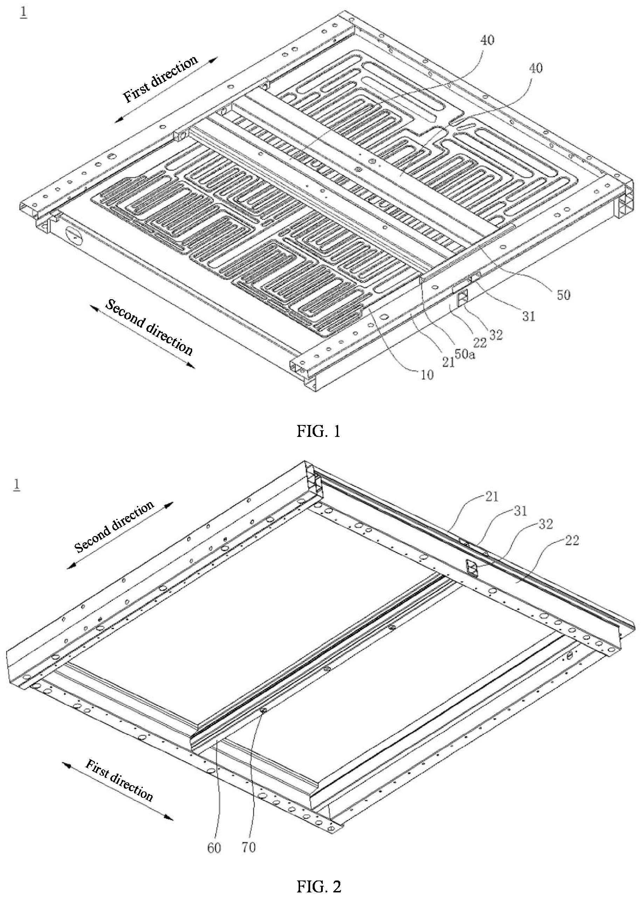

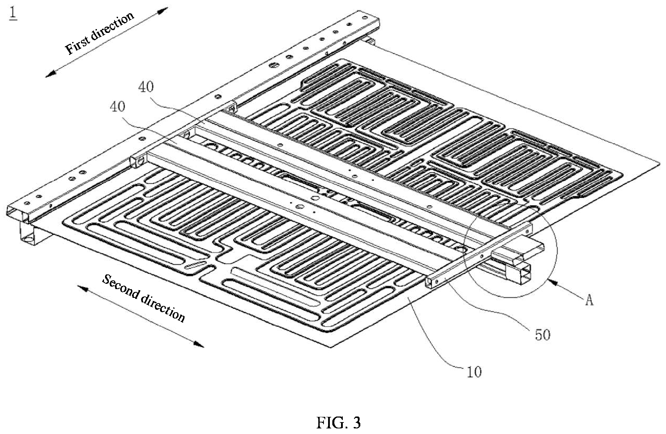

The side pillar collision protection structure 1 according to the embodiment of this application is described with reference to FIG. 1 to FIG. 4.

As shown in FIG. 1, the side pillar collision protection structure 1 according to this application includes: a first beam, a plurality of first cross beams 40, and an energy-absorbing structural component. The first beam extends along a first direction. The plurality of first cross beams 40 are spaced apart along the first direction, each of the first cross beams 40 extends along a second direction, and end portions of the plurality of first cross beams 40 are separately connected to the first beam. The first direction and the second direction form an angle. The energy-absorbing structural component is provided on the first beam. The energy-absorbing structural component is configured to crush and deform under a first set pressure.

Since both the energy-absorbing structural component and the first cross beams 40 are connected to the first beam, after the first beam is subjected to impact force, part of the impact force can be absorbed by the energy-absorbing structural component, and the energy-absorbing structural component crushes under a certain pressure to reduce the impact force on the first beam and the first cross beams 40. The remaining impact force can be distributed in the second direction to the first cross beams 40 extending along the second direction and jointly borne by the plurality of first cross beams 40, which can reduce the force on a single first cross beam 40. Specifically, after the energy-absorbing structural component bears the first set pressure and then crushes and deforms, the remaining load of the impact force is borne by the first beam and the first cross beams 40. The energy-absorbing structural component can reduce the force on the first beam and the first cross beams 40 and improve bending resistance of the first beam and the first cross beams 40. The first beam extending along the first direction may be extending parallel to the first direction, or an extension direction of the first beam forms a certain angle with the first direction. The first cross beam 40 extending along the second direction may be extending parallel to the second direction, or the extension direction of the first cross beam 40 forms a certain angle with the second direction.

In some embodiments, the energy-absorbing structural component may extend along the second direction. The impact force received by the first beam is generally perpendicular to the extension direction of the first beam, that is, the impact force is generally perpendicular to the first direction. The energy-absorbing structural component is designed to extend in the second direction and the second direction forms an angle with the first direction, so that the energy-absorbing structural component is able to bear part of the impact force perpendicular to the first direction. Part of the impact force is borne by the energy-absorbing structural component. When the impact force on the energy-absorbing structural component reaches the first set pressure, the energy-absorbing structural component crushes and deforms. When the impact force received by the energy-absorbing structural component comes from the second direction, after the energy-absorbing structural component crushes, the energy-absorbing structural component deforms along the second direction. In this case, the energy-absorbing structural component may effectively absorb energy, the remaining load of the impact force is smaller, and the protection effect of the energy-absorbing structural component on the first beam and the first cross beams 40 is better. Alternatively, the energy-absorbing structural component receives impact force from the first direction or other directions, and at least part of the energy-absorbing structural component may deform along the first direction or other directions to reduce the force on the first beam and the first cross beams 40. That is, when the setting direction of the energy-absorbing structural component is consistent with a force application direction, the energy-absorbing structural component can absorb energy more effectively, and the effect of reducing the force on the first beam is better.

The side pillar collision protection structure 1 according to this application is provided with the energy-absorbing structural component on the first beam. When the first beam is subjected to impact force, the energy-absorbing structural component can bear part of the impact force, reducing the remaining load of the impact force, reducing the impact force on the first beam and the first cross beams 40, improving the protection effect of the energy-absorbing structural component on the first beam and the first cross beams 40. In addition, the plurality of first cross beams 40 can jointly bear the remaining load of the impact force, which can reduce the impact force on a single first cross beam 40. The energy-absorbing structural component and the plurality of first cross beams 40 can separately absorb the impact force on the first beam, thereby improving the bending resistance of the first beam.

In some embodiments, the first cross beam 40 may be cross beams at a seat, and the plurality of first cross beams 40 may be distributed before and/or after seats.

In some embodiments, the first direction is orthogonal to the second direction, and the setting direction of the energy-absorbing structural component and the setting directions of the plurality of first cross beams 40 are consistent with the force application direction of the first beam, so that the energy-absorbing structural component can effectively absorb energy, and the plurality of first cross beams 40 fully bear the force, effectively reducing the force on the first beam.

Currently, a common method is to improve material strength of the sill beam and the beams before and after seats or increase material thickness of the sill beam and the beams before and after seats. However, this method has problems of high cost, large weight, and inconvenience for vehicle lightweighting. Since the plurality of first cross beams are connected to the first beam, the plurality of first cross beams can jointly bear the remaining load of the impact force, reducing the impact force on a single first cross beam, helping reduce the weight and cost of the side pillar collision protection structure.

According to some embodiments of this application, as shown in FIG. 1 to FIG. 4, the energy-absorbing structural component includes at least one first buffer cavity 30a extending along the second direction. Specifically, the first buffer cavity 30a extending along the second direction can buffer the impact force received by the energy-absorbing structural component from the second direction. The first buffer cavity 30a may be provided in plurality to enhance the capability of the energy-absorbing structural component to bear the force from the second direction, so that the energy-absorbing structural component can more effectively absorb energy and crush and deform. Alternatively, the energy-absorbing structural component further includes a plurality of buffer cavities extending along the first direction or another direction, so as to bear the impact force received by the energy-absorbing structural component from the first direction or another direction, greatly reducing the force on the first beam and the first cross beams 40.

According to some embodiments of this application, a cross-section of the energy-absorbing structural component is in a honeycomb shape, and the cross-section is perpendicular to the second direction. In some embodiments, the cross-section of the energy-absorbing structural component perpendicular to the second direction is in a honeycomb shape, which can enhance the capability of the energy-absorbing structural component to bear pressure in the second direction, and can also enhance the structural strength of the energy-absorbing structural component. Further, a cross-section of the energy-absorbing structural component perpendicular to another direction is also in a honeycomb shape to enhance the capability of the energy-absorbing structural component to bear pressure from another direction.

According to some embodiments of this application, as shown in FIG. 1 to FIG. 4, in the second direction, end portions of at least two first cross beams 40 are connected through a side beam 50, and the side beam 50 is fixed to the first beam. Specifically, at least two first cross beams 40 are connected to the first beam through the side beam 50. The side beam 50 connects at least two first cross beams 40 to distribute the force on the side beam 50 from the first beam to the at least two first cross beams 40, so that at least two first cross beams 40 jointly bear the force, reducing the impact force on a single first cross beam 40. In some embodiments, after the first beam bears the force, the force is divided into two parts, where the energy-absorbing structural component at the first beam absorbs one part of the force, and the remaining force of this part of the force is borne by the first beam; and the other part of the force is transmitted to the side beam 50, where the side beam 50 may distribute the other part of the force to at least two first cross beams 40. Providing the side beam 50 while the energy-absorbing structural component is provided can further distribute the impact force on the first beam and improve the bending resistance of the first beam.

In some embodiments, the first cross beam 40 is provided in plurality, and two adjacent first cross beams 40 among the plurality of first cross beams 40 are connected to one side beam 50, and the remaining first cross beams 40 are directly connected to the first beam. In other embodiments, the first cross beam 40 is provided in plurality and connected to a same side beam 50.

According to some embodiments of this application, the side beam 50 is configured to crush and deform under a second set pressure. Specifically, after the side beam 50 crushes and deforms under force, the transmission of the remaining force to at least two first cross beams 40 connected to the side beam 50 can be blocked, which can reduce the force on the first cross beams 40; and the crushing and deformation of the side beam 50 can also increase the absorption of collision energy by the side beam 50. It should be understood that the second set pressure and the first set pressure may be the same or different, and which may be tested or calculated based on the specific structures of the side beam 50 and the energy-absorbing structural component. The second set pressure and the first set pressure are not limited herein.

According to some embodiments of this application, as shown in FIG. 1 to FIG. 4, the side beam 50 includes at least one second buffer cavity 50a extending along the first direction. Specifically, the second buffer cavity 50a may buffer the force received by the side beam 50 to reduce the force transmitted by the side beam 50 to the plurality of first cross beams 40, thereby reducing the force on each first cross beam 40. The second buffer cavity 50a enables the side beam 50 to effectively absorb energy and then crush and deform, reducing the force on the first beam and the first cross beams 40. Alternatively, the side beam 50 further includes a plurality of buffer cavities extending along other directions to enhance the capability of the side beam 50 to bear force and further reduce the force on the first beam.

In some embodiments, the side beam 50 is consistent with the extension direction of the first beam, and the second buffer cavity 50a of the side beam 50 can absorb energy and then crush and deform when the first beam bears the force, increasing the amount of collision energy on the first beam absorbed by the side beam 50.

According to some embodiments of this application, as shown in FIG. 1 to FIG. 4, in the second direction, an end portion of the energy-absorbing structural component is connected to the side beam 50, and the force transmitted from the first beam to the side beam 50 may be absorbed by the energy-absorbing structural component, reducing the force on the side beam 50 while enhancing the energy absorption effect of the energy-absorbing structural component.

In some embodiments, at least one energy-absorbing structural component is provided and connected to the side beam 50, so that the energy-absorbing structural component can absorb the force transmitted to the first beam and the side beam 50, reducing the force on the first beam and the side beam 50.

In some embodiments, one side surface of the side beam 50 in the second direction is connected to at least two first cross beams 40 by welding, and another side surface of the side beam 50 in the second direction is connected to the first beam by a fixing member such as screw. The first beam, the side beam 50, and the plurality of first cross beams 40 are connected without gaps, which can ensure that a side-collision force transmission path is not interrupted and ensure the force transmission effect, thereby ensuring the energy absorption effect of the energy-absorbing structural component.

In some embodiments, the another side surface of the side beam 50 in the second direction is connected to the first beam through a fastener.

According to some embodiments of this application, as shown in FIG. 1 and FIG. 2, the energy-absorbing structural component passes through the first beam, so that at least part of the energy-absorbing structural component is located inside the first beam. In some embodiments, the energy-absorbing structural component extends in the second direction. When the first beam is subjected to impact force perpendicular to the first direction, the energy-absorbing structural component bears part of the impact force perpendicular to the first direction. When the impact force on the energy-absorbing structural component reaches the first set pressure, the energy-absorbing structural component crushes and deforms to reduce the load borne by the first beam.

In current vehicles, an inner sill beam is provided between an outer sill beam and an energy housing and connected to a fixing bracket of the energy housing. Since there is gap between the inner sill beam and the outer sill beam, and the gap is on a collision force transmission path of the side pillar, the gap at this position causes a vacancy in the collision force transmission structure of the side pillar, which will increase a deformation intrusion amount of the inner and outer sill beams, leading to poor protection performance for the battery cell.

According to some embodiments of this application, the side pillar collision protection structure 1 further includes a housing (not shown), and a holding space for holding a battery unit is provided in the housing. In some embodiments, the housing includes a box body and a top cover 10 adapted to cooperate with the box body, and the box body cooperates with the top cover 10 to define the holding space to hold the battery unit. In this case, the battery unit may be placed in the box body or suspended on the top cover 10, which is not limited herein. In some embodiments, the top cover 10 may be floor of the vehicle body, and in this case, the side pillar collision protection structure 1 is overall located at the bottom of the vehicle. Alternatively, the top cover 10 is configured as a cooling plate for exchanging heat with the battery unit, which is not limited herein. The first beam is generally provided on a side of the top cover 10. The energy-absorbing structural component and the side beam 50 provided in the side pillar collision protection structure 1 can distribute the impact force on the first beam, improve the bending resistance of the first beam, reduce the deformation amount of the first beam, avoid deformation of the first beam and intrusion into the holding space, and strengthen the protection of the battery unit.

In some embodiments, the battery unit is a battery cell.

According to some embodiments of this application, as shown in FIG. 2, the side pillar collision protection structure 1 further includes an intermediate beam 60 provided in the holding space, the intermediate beam 60 extends along the second direction, the intermediate beam 60 is provided below the top cover 10 of the housing, and the intermediate beam 60 is fixed to at least one first cross beam 40. Specifically, both the first cross beam 40 and the intermediate beam 60 extend along the second direction. In some embodiments, the side beam 50 is located above the top cover 10 in a height direction of the vehicle 1000 and connected to the first beam, and the side beam 50 and the plurality of first cross beams 40 form an upper force transmission path of the first beam above the top cover 10. The box body of the housing is located below the top cover 10 in the height direction of the vehicle 1000, and the intermediate beam 60 is located in the holding space and may be connected to the first beam to form a lower force transmission path of the first beam below the top cover 10. The intermediate beam 60 is fixed to at least one first cross beam 40, so that the upper force transmission path and the lower force transmission path may transmit force as a whole, improving the capability to transmit the load as a whole, improving the effect of reducing the impact force on the first beam and improving the bending resistance of the first beam.

According to some embodiments of this application, as shown in FIG. 2, the intermediate beam 60 is fixed to one of the first cross beams 40 through a plurality of fixing connectors 70, enabling overall force transmission, improving the capability to transmit the overall load. In addition, the multiple fixing points between the intermediate beam 60 and the first cross beams 40 enhance the stability of the fixed connection between the intermediate beam 60 and the first cross beams 40.

According to some embodiments of this application, as shown in FIG. 2, in the second direction, part of the energy-absorbing structural component is arranged directly opposite to the intermediate beam 60. Specifically, both the energy-absorbing structural component and the intermediate beam 60 extend along the second direction. In this case, part of the energy-absorbing structural component is directly opposite to the intermediate beam 60, so that part of the energy-absorbing structural component can absorb part of the impact force to reduce the force received by the intermediate beam 60, which can reduce the pressure of the lower force transmission path in transmitting the load.

According to some embodiments of this application, as shown in FIG. 2, part of the energy-absorbing structural component is connected to the intermediate beam 60. In some embodiments, the energy-absorbing structural component may preferentially bear the force and undergo crushing and deformation. After the energy is effectively absorbed, the remaining load is then transmitted to the intermediate beam 60. This effectively reduces the load borne by the intermediate beam 60 and the first cross beam 40, and reduces the pressure of the upper force transmission path and the lower force transmission path in transmitting the load. In some embodiments, the energy-absorbing structural component is directly opposite to and connected with an end portion, facing the first beam, of the intermediate beam 60, thereby fixedly connecting the intermediate beam 60 to the first beam to form the lower force transmission path of the top cover 10. Such an arrangement may also strengthen the structural strength of the intermediate beam 60 and enhance the capability of the intermediate beam 60 to bear pressure.

According to some embodiments of this application, as shown in FIG. 1 to FIG. 4, the energy-absorbing structural component includes a first energy-absorbing member 31 and a second energy-absorbing member 32, the first energy-absorbing member 31 and the second energy-absorbing member 32 are spaced apart in an up-down direction, the first energy-absorbing member 31 is connected to the side beam 50, the second energy-absorbing member 32 is connected to the intermediate beam 60, and both the first energy-absorbing member 31 and the second energy-absorbing member 32 are configured to crush and deform under the first set pressure. In some embodiments, both the first energy-absorbing member 31 and the second energy-absorbing member 32 pass through the first beam. The first energy-absorbing member 31 is connected to the side beam 50 and is axially parallel and directly opposite to the first cross beam 40. The second energy-absorbing member 32 is axially parallel and directly opposite to the intermediate beam 60. When the first beam is impacted, the first energy-absorbing member 31 and the second energy-absorbing member 32 preferentially bear the force and undergo crushing and deformation, and both the first energy-absorbing member 31 and the second energy-absorbing member 32 crush and deform in the axial direction, effectively absorbing the energy, thereby reducing the load borne by the first cross beam 40 and the intermediate beam 60.

In some embodiments, the first energy-absorbing member 31 is connected to the side beam 50 and directly opposite to an end portion of one of the first cross beams 40. The first energy-absorbing member 31 is formed with two first buffer cavities 30a. An arrangement direction of the two first buffer cavities 30a is consistent with the extension direction of the side beam 50 and the first beam, and each first buffer cavity 30a extends along the second direction, which can enhance the capability of the first energy-absorbing member 31 to bear the force from the second direction, so that the energy-absorbing structural component can more effectively absorb energy and then crush and deform, reducing the force on the side beam 50 and the first beam.

In some embodiments, the second energy-absorbing member 32 is directly opposite to and connected to an end portion of the intermediate beam 60. The second energy-absorbing member 32 is formed with two first buffer cavities 30a, where the two first buffer cavities 30a are sequentially arranged in a direction away from the top cover 10, and each first buffer cavity 30a extends along the second direction, which can enhance the capability of the first energy-absorbing member 31 to bear the force from the second direction, so that the energy-absorbing structural component can more effectively absorb energy and then crush and deform, reducing the force on the intermediate beam 60 and the first beam.

In some embodiments, a plurality of the first cross beams 40 are provided and all connected to the side beam 50, and a first energy-absorbing member 31 is provided inside each first cross beam 40.

In some embodiments, cross-sections of the first energy-absorbing member 31 and the second energy-absorbing member 32 in the first direction may be a closed roll-formed cross-section.

In some embodiments, the cross-sections of the first energy-absorbing member 31 and the second energy-absorbing member 32 in the first direction may be in a shape of two-section rectangle, square, three-section rectangle, grid, or the like, as long as the structural strength is ensured.

In some embodiments, the first energy-absorbing member 31 and the second energy-absorbing member 32 may be made of energy-absorbing materials such as steel, aluminum alloy materials, honeycomb aluminum, or composite materials, as long as the energy absorption effect is ensured.

According to some embodiments of this application, as shown in FIG. 1 to FIG. 4, both the first energy-absorbing member 31 and the second energy-absorbing member 32 pass through the first beam. In some embodiments, the first energy-absorbing member 31 is embedded in an upper part of the first beam in the height direction of the vehicle 1000 and is axially parallel and directly opposite to the first cross beam 40, and the second energy-absorbing member 32 is embedded in a lower part of the first beam in the height direction and is axially parallel and directly opposite to the intermediate beam 60. When the first beam is impacted, the first energy-absorbing member 31 and the second energy-absorbing member 32 preferentially bear the force and undergo crushing and deformation, and both the first energy-absorbing member 31 and the second energy-absorbing member 32 crush and deform in the axial direction, effectively absorbing energy and reducing the force on the first beam.

In some embodiments, the first beam includes a first portion 21 and a second portion 22 that are arranged in parallel. The first portion 21 is connected to the side beam 50, the first energy-absorbing member 31 sequentially passes through the first portion 21, the side beam 50, and one first cross beam 40. The second portion 22 is opposite to the intermediate beam 60 in the second direction, and the second energy-absorbing member 32 sequentially passes through the second portion 22 and the intermediate beam 60.

In current vehicles, the inner sill beam is provided between the outer sill beam and the energy housing and connected to the fixing bracket of the energy housing, and the inner sill beam occupies the space of the energy housing, resulting in a reduced space for arranging the battery cell.

According to some embodiments of this application, the first beam is a sill beam, and part of a side wall of the housing is defined by the first beam. In some embodiments, the first beam may serve as a part of the housing. In this case, part of the side beam of the housing is saved, and integration of the housing and the sill beam is achieved, ensuring the space for arranging the battery unit, simplifying the overall structure of the side pillar collision protection structure 1, reducing component costs of the side pillar collision protection structure 1.

In some embodiments of this application, as shown in FIG. 1 to FIG. 4, the side pillar collision protection structure 1 includes the top cover 10, the first beam, the two first cross beams 40, the side beam 50, the intermediate beam 60, and the energy-absorbing structural component. The top cover 10 is provided with the first beam extending along the first direction on one side in the second direction. The side beam 50 is located above the top cover 10 and extends along the first direction. The two first cross beams 40 are also located above the top cover 10 and extend along the second direction. The intermediate beam 60 is located below the top cover 10 and extends along the first direction. The energy-absorbing structural component includes the first energy-absorbing member 31 and the second energy-absorbing member 32 extending along the second direction, where the first direction is orthogonal to the second direction. The first beam includes the first portion 21 and the second portion 22 that are parallel and respectively provided on the upper and lower sides of the top cover 10. The first portion 21 is connected to one side surface of the side beam 50 in the second direction. Another side surface of the side beam 50 in the second direction is welded to end portions of the two first cross beams 40 that are on the same side in the second direction. The first energy-absorbing member 31 passes through the first portion 21, is connected to the side beam 50, and is directly opposite to one first cross beam 40. The second portion 22 is directly opposite to the intermediate beam 60 in the second direction. The second energy-absorbing member 32 passes through the second portion 22 and is directly opposite to and connected to an end portion of the intermediate beam 60. The intermediate beam 60 is fixed to the first cross beam 40 provided with the first energy-absorbing member 31 through a plurality of fixing connectors 70.

When the first beam is subjected to impact force, the impact force is distributed to the upper side of the top cover 10 and the lower side of the top cover 10 by the first portion 21 and the second portion 22 located on the upper and lower sides of the top cover 10, respectively. The impact force received by the first portion 21 is absorbed by the first energy-absorbing member 31. After the first energy-absorbing member 31 crushes, the remaining force is transmitted to the side beam 50. After the side beam 50 absorbs the force and crushes, the remaining force is borne by the two first cross beams 40 separately. The impact force received by the second portion 22 is absorbed by the second energy-absorbing member 32. After the second energy-absorbing member 32 crushes, the remaining force is transmitted to the intermediate beam 60. Further, since the intermediate beam 60 is fixedly connected to one first cross beam 40, the intermediate beam 60 and the first cross beam 40 can transmit pressure with each other, improving the load transmission capability on the upper and lower sides of the top cover 10. This can effectively reduce the impact force on the first beam, reduce the force on the first beam, and improve the bending resistance of the first beam.

The vehicle body according to this application are briefly described below.

The vehicle body according to this application includes the side pillar collision protection structure 1 according to any one of the above embodiments. Since the vehicle body according to this application is provided with the side pillar collision protection structure 1 in the above embodiments, the bending resistance of the vehicle body and the safety performance are improved.

The vehicle 1000 according to this application is briefly described below.

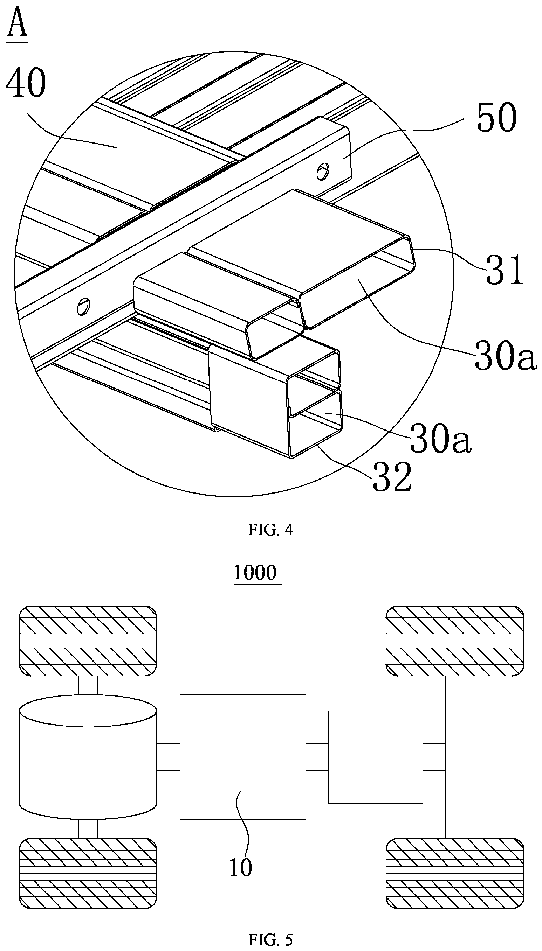

As shown in FIG. 5, the vehicle 1000 according to this application includes the vehicle body described in the above embodiment. Since the vehicle 1000 according to this application is provided with the vehicle body in the above embodiment, the safety performance of the vehicle 1000 is improved.

The vehicle 1000 in this application may be a fuel vehicle, a gas vehicle, or a new energy vehicle, and the new energy vehicle may be a pure electric vehicle, a hybrid vehicle, an extended-range vehicle, or the like. A floor is provided inside the vehicle 1000, and the floor may be located in the vehicle body of the vehicle 1000 and may carry in-vehicle structures such as seats and battery units. In this case, at least part of the floor may be configured as the top cover 10 of the housing.

In the description of this specification, descriptions of the reference terms such as "an embodiment", "some embodiments", "example", "specific example", or "some examples" mean that the specific features, structures, materials, or characteristics described with reference to the embodiment or example are included in at least one embodiment or example of this application. In this specification, the schematic representations of the above terms do not necessarily refer to the same embodiment or example. Moreover, the described specific features, structures, materials, or characteristics may be combined in any one or more embodiments or examples in an appropriate manner. In addition, those skilled in the art can combine different embodiments or examples described in this specification.

Although the embodiments of this application are shown and described above, changes, modifications, replacements, and variations may be made based on the above embodiments.

## Claims

1. A side pillar collision protection structure, comprising:
a first beam, wherein the first beam extends along a first direction;
a plurality of first cross beams, wherein the plurality of first cross beams are spaced apart along the first direction, each of the first cross beams extends along a second direction, end portions of the plurality of first cross beams are separately connected to the first beam, and the first direction and the second direction form an angle; and
an energy-absorbing structural component, wherein the energy-absorbing structural component is provided on the first beam, and the energy-absorbing structural component is configured to crush and deform under a first set pressure.

2. The side pillar collision protection structure according to claim 1, wherein the energy-absorbing structural component comprises at least one first buffer cavity extending along the second direction.

3. The side pillar collision protection structure according to claim 1, wherein a cross-section of the energy-absorbing structural component is in a honeycomb shape, and the cross-section is perpendicular to the second direction.

4. The side pillar collision protection structure according to any one of claims 1 to 3, wherein in the second direction, end portions of at least two of the first cross beams are connected through a side beam, and the side beam is fixed to the first beam.

5. The side pillar collision protection structure according to claim 4, wherein the side beam is configured to crush and deform under a second set pressure.

6. The side pillar collision protection structure according to claim 5, wherein the side beam comprises at least one second buffer cavity extending along the first direction.

7. The side pillar collision protection structure according to any one of claims 4 to 6, wherein in the second direction, an end portion of the energy-absorbing structural component is connected to the side beam.

8. The side pillar collision protection structure according to claim 7, wherein the energy-absorbing structural component passes through the first beam.

9. The side pillar collision protection structure according to any one of claims 4 to 8, further comprising a housing, wherein a holding space for holding a battery unit is provided in the housing.

10. The side pillar collision protection structure according to claim 9, wherein the side pillar collision protection structure further comprises an intermediate beam provided in the holding space, the intermediate beam extends along the second direction, the intermediate beam is provided below a top cover of the housing, and the intermediate beam is fixed to at least one of the first cross beams.

11. The side pillar collision protection structure according to claim 10, wherein the intermediate beam is fixed to one of the first cross beams through a plurality of fixing connectors.

12. The side pillar collision protection structure according to claim 10, wherein in the second direction, part of the energy-absorbing structural component is arranged directly opposite to the intermediate beam.

13. The side pillar collision protection structure according to claim 12, wherein part of the energy-absorbing structural component is connected to the intermediate beam.

14. The side pillar collision protection structure according to claim 13, wherein the energy-absorbing structural component comprises a first energy-absorbing member and a second energy-absorbing member, the first energy-absorbing member and the second energy-absorbing member are spaced apart in an up-down direction, the first energy-absorbing member is connected to the side beam, the second energy-absorbing member is connected to the intermediate beam, both the first energy-absorbing member and the second energy-absorbing member are configured to crush and deform under the first set pressure.

15. The side pillar collision protection structure according to claim 14, wherein both the first energy-absorbing member and the second energy-absorbing member pass through the first beam.

16. The side pillar collision protection structure according to claim 9, wherein the first beam is a sill beam, and part of a side wall of the housing is defined by the first beam.

17. A vehicle body, comprising the side pillar collision protection structure according to any one of claims 1 to 16.

18. A vehicle, comprising the vehicle body according to claim 17.
